# EUROPEAN PATENT APPLICATION

(11) **EP 4 610 688 A1**
(43) Date of publication of application: **03.09.2025**
(21) Application number: 24160040.2
(22) Date of filing: 27.02.2024
(51) Int. Cl.: G01S 5/02, G06N 3/045, G06N 3/08

(54) **A COMPUTER-IMPLEMENTED METHOD FOR GENERATING A PREDICTOR FOR A POSITION OF AN OBJECT WITHIN A PREDETERMINED ENVIRONMENT BY THE USE OF A RADIO NETWORK**

(71) Applicant: Siemens Aktiengesellschaft, 80333 München (DE)
(72) Inventor: Bröring, Arne, 81735 München (DE); Tanz, Jakob, 40625 Düsseldorf (DE)
(74) Representative: Siemens Patent Attorneys

(57) **Abstract**

The invention relates to a computer-implemented method for generating a predictor for a position of an object within a predetermined environment (EN) by the use of a radio network (RN), where the radio network comprises a plurality of anchors (aᵢ, ..., aᵢ₊₃) being receivers for radio signals within the radio network, the method comprising the following steps:
i) providing a plurality of data points (dᵤ), each data point comprising a different ground truth position of a sender (S, S') and several channel impulse responses, where each channel pulse impulse belongs to a respective anchor;
ii) learning a first neural network structure, where a respective first neural network outputs a position;
iii) learning a second neural network structure, where a respective second neural network is associated with a respective first neural network and outputs a positional error;
iv) configuring the predictor such that the predicted position of the object is calculated.

## Description

The invention relates to a computer-implemented method for generating a predictor for a position of an object within a predetermined environment by the use of a radio network.

Localization systems based on radio technologies are important in different application fields. Particularly, for an intelligent management and usage of assets, e.g. tools within an industrial environment or medical devices within a hospital, it is necessary to have access to the information about the location of these assets.

Location systems can use different radio technologies such as UWB, WiFi or cellular networks. Different methods are known to determine the position of an object based on those radio technologies. E.g., traditional geometric approaches use the time difference of arrival of corresponding radio waves in order to deduct positions based on triangulation.

Another method for localization based on radio networks is so-called "fingerprinting". For this method, radio signal samples, e.g. the channel impulse responses or the received signal strengths, are utilized to characterize the radio signal distribution over a predetermined environment. New radio signals originating from an object are compared with those signal samples in order to derive the location of the object therefrom.

For location methods based on fingerprinting, it is well-known to use one or more multiple neural networks which are trained by previous collected data samples (see e.g. documents [1] and [2]). The trained neural network predicts a location of an object based on corresponding radio signals input to the neural network. Furthermore, it is known from the prior art to use machine learning to detect errors in traditional geometric localization approaches (see e.g. document [3]).

It is an object of the invention to provide a computer-implemented method for generating a predictor for localizing an object based on a radio network, where the predictor has an improved localization accuracy.

This object is solved by the method according to claim 1. Preferred embodiments of the invention are defined in the dependent claims.

The computer-implemented method according to the invention generates a predictor for a position of an object within a predetermined environment by the use of a radio network. The radio network comprises a plurality of anchors being receivers for radio signals within the radio network. The method comprises the following steps i) to iv).

In step i), a plurality of data points is provided, where each data point comprises a different ground truth position of a sender out of one or more senders of the same type within the predetermined environment and several channel impulse responses. Each channel impulse response belongs to a respective anchor of the plurality of anchors and represents a radio signal received by the respective anchor in response to a radio pulse of the sender located at the ground truth position of the respective data point. The ground truth position is assumed to be the correct real position of the sender. This position is determined by a very accurate measurement system, such as a LIDAR system or an optical system as mentioned below.

The above step i) of providing a plurality of data points may refer to a step of reading out the data points from a storage. I.e., in this case, the data points have been previously collected, e.g. by moving corresponding senders within the predetermined environment. Nevertheless, the step i) may also refer to a step including the collection phase of the data points.

In step ii), a first neural network structure comprising one or more first neural networks is learned based on a first training data set. The first training data set comprises the ground truth position and the channel impulse responses of each data point of the plurality of data points. A respective first neural network is associated with another anchor group out of the plurality of anchors, each anchor of the plurality of anchors being included in at least one anchor group. In other words, the anchors in the anchor groups cover all anchors of the plurality of anchors. In this respect, it is possible that an anchor belongs to several anchor groups as long as each anchor group differs in at least one anchor from any other anchor group. Furthermore, it is also possible that the anchor groups form disjoint anchor groups so that an anchor of the plurality of anchor groups only belongs to one anchor group. In one embodiment, the first neural network structure may only comprise a single first neural network. In this case, there is only one anchor group which coincides with the plurality of anchors.

The learning of the first neural network structure in step ii) has the target that, for a respective first neural network and a respective data point, an estimated position output by the respective first neural network in response to an input of the channel impulse responses of the anchors of the associated anchor group of the respective first neural network for the respective data point corresponds to the ground truth position of the respective data point. In other words, the learning of the first neural network is a supervised learning where each first neural network shall generate a prediction of the ground truth position as an output in response to the channel impulse responses of the anchors as input. In case that for a data point one or more channel impulse responses are missing in an associated anchor group of a first neural network, this data point is preferably disregarded for learning this first neural network.

In step iii), a second neural network structure comprising one or more second neural networks is learned based on a second training data set, where a respective second neural network is associated with a respective first neural network. In other words, for each first neural network there is one unique second neural network being associated therewith. The second training data set for learning the second neural network structure comprises, for a respective data point and a respective second neural network, the channel impulse responses of the anchors of the associated anchor group of the associated respective first neural network and a ground truth distance being the distance between the ground truth position of the respective data point and the estimated position output by the associated respective first neural network in response to the input of the channel impulse responses of the anchors of the associated respective first neural network for the respective data point.

The learning of the second neural network structure has the target that, for a respective second neural network and a respective data point, an estimated distance output by the respective second neural network corresponds to the ground truth distance between the ground truth position of the respective data point and the estimated position output by the associated respective first neural network in response to the input of the channel impulse responses of the anchors of the associated anchor group of the associated respective first neural network for the respective data point.

In other words, the respective second neural networks are configured to generate an output in the form of a positional error (ground truth distance between the ground truth position and the position estimated by first neural network, as defined above) produced by the corresponding first neural networks.

In step iv), the predictor is configured such that, when measured channel impulse responses of the plurality of anchors resulting from a radio pulse of a sender on the object are provided as input to the first and second neural network structures, the predicted position of the object is calculated only from the outputs of specific first neural networks out of the one or more first neural networks, where each specific first neural network is associated with a second neural network having an output being below a value according to a threshold criterion. I.e., the predicted position is not derived from outputs of first neural networks having a high positional error.

The above threshold criterion should be understood broadly. Particularly, the threshold criterion needs not be associated with a fixed threshold value. Instead, the value can be defined indirectly, e.g. via a predetermined number of second neural networks having the lowest output as defined below. Furthermore, if no specific first neural network can be found during the runtime phase of the predictor, the method is terminated without predicting a position. Optionally, a corresponding information that a position prediction is not possible due to a too high positional error may be output via a user interface in this case.

The method of the invention has the advantage that the predictor determines the predicted position considering the positional errors produced by corresponding first neural networks. In other words, in case that a positional error of a corresponding first neural network is very high, this positional error is disregarded when calculating the predicted position of a corresponding object.

In a preferred embodiment, the invention is used for indoor localization. I.e., the predetermined environment is an indoor environment. In another preferred embodiment, the predetermined environment refers to an industrial plant which is an important application area for localization, e.g. for localizing robots or automated guided vehicles.

In another preferred embodiment, the one or more senders of the same type as defined in the above step i) each are senders on an automated guided vehicle. Hence, the corresponding data points provided in step i) are being collected or have been collected very efficiently.

In another preferred embodiment, the ground truth positions provided in step i) are being acquired or have been acquired by a LIDAR system or an optical system moving together with the sender. Preferably, the sender and the LIDAR or optical system are positioned at the same platform, e.g. the same automated guided vehicle. LIDAR systems and optical systems provide very accurate measurements of the ground truth positions.

In another preferred variant of the invention, the radio network is based on a short range radio technology, preferably UWB (UWB = Ultra-Wide Band; IEEE standard family 802.15-4). Alternatively, the radio network may be based on a cellular radio technology, preferably 5G or 6G.

In a particularly preferred embodiment, the one or more first neural networks and/or the one or more second neural networks are convolutional neural networks. Convolutional neural networks are well-known from the prior art. Additionally or alternatively, the one or more first neural networks and/or the one or more second neural networks are deep neural networks, i.e. neural networks having several hidden layers.

In another preferred variant, the predicted position of the object in step iv) is or depends on a mean of the outputs (i.e. the estimated positions) of the specific first neural networks. This mean may be the arithmetic mean. Alternatively, the mean may be a weighted mean, where the weight of an output of a respective specific first neural network increases with a decreasing output (i.e. a decreasing positional error) of the associated second neural network. In another variant, the predicted position of the object may be the median of the outputs of the specific first neural networks.

In another preferred embodiment of the method according to the invention, the threshold criterion in step iv) is such that the output of the second neural network is below a predetermined threshold. Alternatively, the threshold criteria may also be defined such that the output of the second neural network belongs to a predetermined number of second neural networks having the lowest outputs.

Besides the above method for generating a predictor, the invention also refers to a computer-implemented method for predicting a position of an object within a predetermined environment by the use of a radio network, where the radio network comprises a plurality of anchors being receivers for radio signals within the radio network. In this method, a predictor is used which has been previously generated based on the above-described method or one or more preferred embodiments thereof. Alternatively, the method for generating the predictor may also be part of the method for predicting the position of the object.

In the method for predicting the position of the object, measured channel impulse responses of the plurality of anchors resulting from a radio pulse of a sender on the object are provided as input to the first and second neural network structures, resulting in a predicted position of the object. The sender on the object is of the same type as the one or more senders as defined for the above method for generating a predictor.

Besides the above methods, the invention refers to an apparatus for data processing, where the apparatus is configured to carry out a method for generating a predictor or a method for predicting a position of an object according to the invention or one or more preferred embodiments thereof.

Furthermore, the invention refers to a computer program product with program code, which is stored on a machine-readable carrier, for carrying out a method for generating a predictor or a method for predicting a position of an object according to the invention or one or more preferred embodiments thereof when the program code is executed on a computer.

Moreover, the invention refers to a computer program with program code for carrying out a method for generating a predictor or a method for predicting a position of an object according to the invention or one or more preferred embodiments thereof when the program code is executed on a computer.

In the following, an embodiment of the invention will be described in detail with respect to the accompanying drawings, wherein:
- Fig. 1: is a schematic diagram illustrating the collection of data points which may be used in an embodiment of the invention;
- Fig. 2: is a schematic diagram illustrating an embodiment of a method for generating a predictor according to the invention; and
- Fig. 3: is a schematic diagram illustrating the runtime phase of the predictor generated according to the method of Fig. 2.

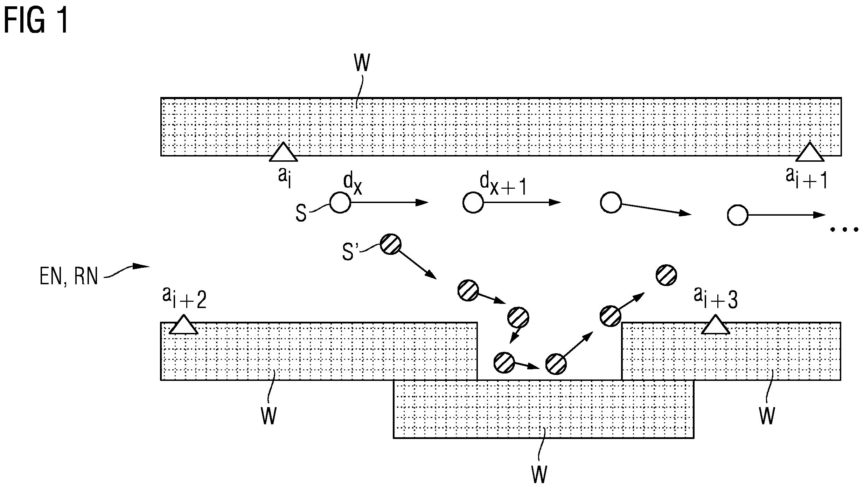

Fig. 1 is a schematic diagram illustrating the collection of data points which may be used in an embodiment of the invention. The data point collection as shown in Fig. 1 is per se known from the prior art. Fig. 1 shows in top view a predetermined environment EN which includes walls W. In this environment, a radio network RN comprising a plurality of receivers in the form of anchors is installed. Some of those anchors are shown in Fig. 1 and are designated by reference numerals aᵢ, aᵢ₊₁, aᵢ₊₂, aᵢ₊₃. For collecting corresponding data points, a sender S and a sender S' both being of the same type move within the predetermined environment EN. The sender S is represented by a white circle whereas the sender S' is represented by a hatched circle. Both senders are radio tags which are preferably attached to an automated guided vehicle. The radio tags use the radio technology of the radio network RN, i.e. the radio technology of the anchors/receivers aᵢ to aᵢ₊₃.

During their movement, the senders S and S' transmit radio pulses which result in received radio signals at the anchors aᵢ, ..., aᵢ₊₃. The received radio signals are so-called channel impulse responses well-known for a skilled person. Each channel impulse response is associated with a corresponding anchor receiving the radio signal in response to the radio pulse transmitted by the sender S or S'. Thus, at corresponding positions of the senders, channel impulse responses are acquired where each channel impulse response is assigned to an anchor in the predetermined environment EN. The channel impulse responses form part of corresponding data points where two data points dₓ and dₓ₊₁ at corresponding time instances tₓ and tₓ₊₁ are shown in Fig. 1 by the way of example.

Additionally, each data point comprises a so-called ground truth position being the (real) position of the sender when the corresponding channel impulse responses are acquired. Those real positions may be pre-known, e.g. the sender may be located at pre-known positions when sending a radio pulse. Furthermore, the corresponding senders may themselves determine the ground truth position, e.g. by a LIDAR system or an optical system carried on the platform on which the corresponding sender is located.

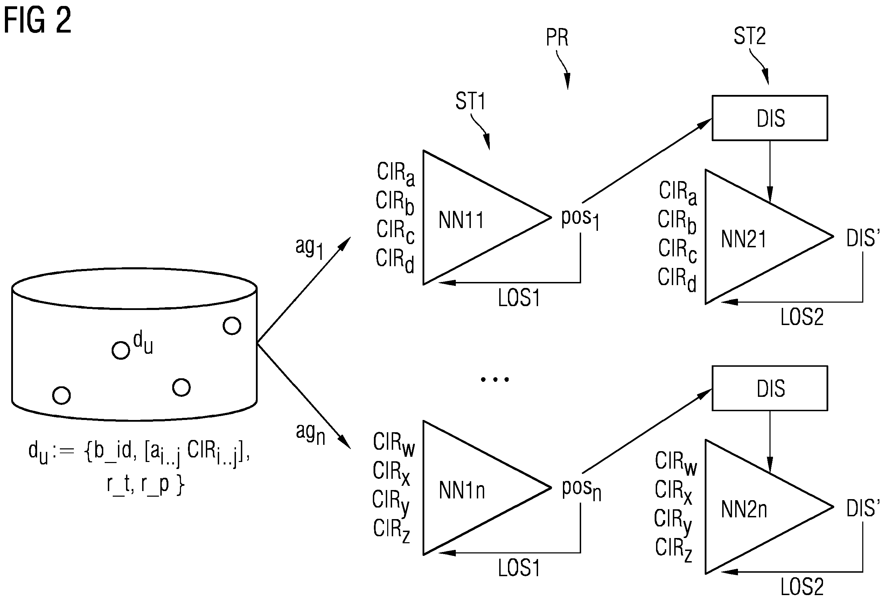

The method of Fig. 2 uses corresponding data points collected according to Fig. 1 in order to learn a predictor PR comprising a plurality of neural networks. After having been learned, the predictor predicts the position of an object via measured radio signals. According to Fig. 2, a plurality of data points dᵤ is processed. For the sake of simplicity, only four data points represented by white circles are shown in Fig. 2. However, the total number of data points is much higher. Each data point dᵤ is characterized by a burst identification b_id (i.e. an identification of the corresponding radio pulse), an anchor a_{i,...,j} receiving the corresponding channel impulse response CIR_{i,...,j}, a recordal time r_t of the channel impulse response as well as the above mentioned ground truth position r_p of the sender when transmitting the radio pulse.

In the method as described in the following, the data points dᵤ are used for learning a first neural network structure ST1 and a second neural network structure ST2. To do so, n anchor groups ag₁, ag₂, ..., agₙ are formed by the anchors of the radio network RN. All anchor groups comprise the same number of anchors which is four in the present case. Furthermore, the anchors of all anchor groups cover all anchors in the radio network. However, an anchor may belong to several anchor groups as long as there do not exist identical anchor groups. Each of the anchor groups ag₁, ag₂, ..., agₙ is associated with a corresponding first neural network NN1, ..., NN1n. Preferably, those first neural networks are convolutional neural networks. Each first neural network receives as an input the four channel impulse responses of the anchors of the corresponding anchor group.

For the sake of simplicity, only two first neural networks NN11 and NN1n are shown in Fig. 2. The network NN11 receives the channel impulse responses CIRₐ, CIR_{b}, CIR_{c} and CIR_{d} belonging to the anchor group ag₁. The other first neural networks receive corresponding channel impulse responses from the associated anchor groups. Particularly, the other illustrated first neural network NN1n receives the channel impulse responses CIR_{w}, CIRₓ, CIR_{y} and CIR_{z} of the anchor group agₙ.

By well-known machine learning, each of the first neural networks NN11 to NN1n is learned such that the position posᵢ output by the corresponding first neural network NN1i (i = 1, ..., n) shall represent the ground truth position r_p of the respective data point dᵤ. This can be achieved by supervised learning using a corresponding loss function LOS1 representing the mean squared error between the position predicted by the corresponding first neural network and the ground truth position. The loss of the loss function LOS1is fed back to the corresponding first neural network in a well-known backpropagation step. At the end of the learning of the first neural network structure ST1, all first neural networks NN11 to NN1n are configured to predict a position of an object based on channel impulse responses of anchor groups input to the respective first neural network.

After having learned the first neural network structure ST1, a second neural network structure ST2 is learned. Analogously to the first network structure ST1, the second network structure ST2 comprises neural networks in the form of second neural networks NN21, ..., NN2n. Each second neural network is uniquely associated with a corresponding first neural network and receives the same input as the associated first neural network, i.e. the channel impulse responses of the corresponding anchor group which are the channel impulse responses CIRₐ, CIR_{b}, CIR_{c}, CIR_{d} for the second neural network NN21 and the channel impulse responses CIR_{w}, CIRₓ, CIR_{y}, CIR_{z} for the second neural network NN2n.

As an output, a corresponding second neural network shall produce the positional error made by the associated first neural network. I.e., the distance DIS' output by the second neural network shall correspond to the distance DIS which is the difference (represented by an absolute value) between the ground truth position r_p and the estimated position output by the corresponding first neural network. The second neural networks are once again trained by supervised learning using a corresponding loss function LOS2 being the mean squared error between the predicted distance DIS' of the corresponding second neural network and the distance DIS describing the correct positional error made by the associated first neural network. The loss of the loss function LOS2 is backpropagated to the second neural network in the learning phase.

In the learning methods of the first and second neural network structures ST1, ST2 as described above, a data point dᵤ is only used for learning a first neural network and an associated second neural network in case that the data point dᵤ comprises channel impulse responses for all anchors used as input for the first and second neural networks. If this is not the case, this data point is disregarded for the learning of the first and second neural networks.

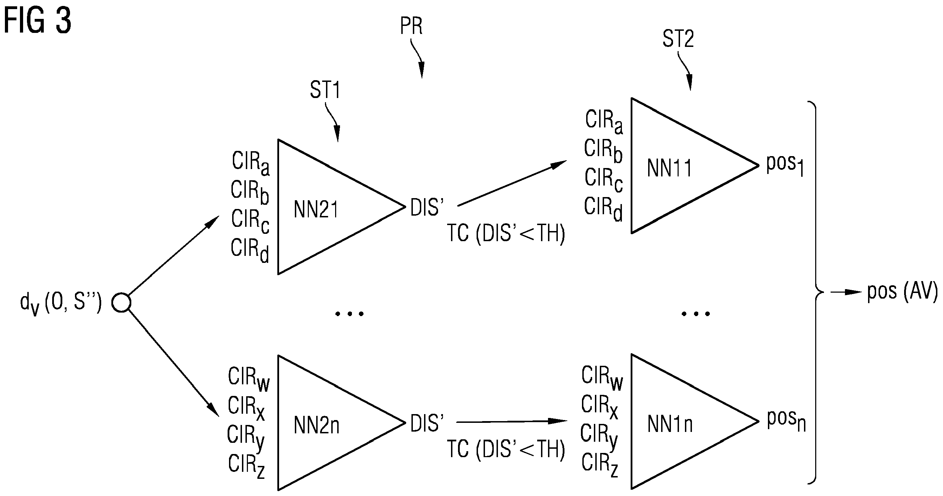

After having trained the first neural network structure ST1 and the second neural network structure ST2, a calculation method is implemented describing which positions pos₁ to posₙ predicted by the first neural networks based on measured channel impulse responses shall be used to calculate a final predicted position. In the embodiment described herein, only those predicted positions having a positional error (i.e. a distance DIS' predicted by the second neural network) being below a predetermined threshold will be used for calculating the final predicted position. In the embodiment described herein, the final predicted position is the arithmetic average of those predicted positions. This will be described in more detail with respect to Fig. 3.

Fig. 3 is a schematic diagram showing the runtime phase of the predictor PR having been learned according to Fig. 2. In this runtime phase, a new signal being a data point dᵥ in the form of channel impulse responses received by the anchors of the radio network RN is obtained. This signal is triggered by a sender S" being of the same type as the senders S and S' shown in Fig. 1. The sender S" is located on an object O, the position of which shall be determined by the predictor PR. The channel impulse responses of the data point dᵥ are sent to all those second neural networks out of the second neural networks NN21, ... , NN2n for which all channel impulse responses of the corresponding anchor group are available. The other second neural networks not having channel impulse responses for all the anchors of the anchor group are disregarded.

Each of the second neural networks NN21, ..., NN2n generates as an output a predicted positional error in the form of a distance DIS'. The distance for each second neural network is evaluated based on a threshold criterion TC. In the embodiment of Fig. 3, this threshold criterion is such that a distance DIS' fulfills the threshold criterion, in case that the distance DIS' is smaller than a predetermined threshold TH. Only for those second neural networks for which the distance DIS' fulfills this threshold criterion, the data point dᵥ is forwarded to the associated first neural networks. Into those first neural networks, the corresponding channel impulse responses of the anchors of the associated anchor group are input so that the first neural networks output the corresponding positions pos₁, ..., posₙ. Those positions are characterized by a small positional error being below the threshold TH. Hence, those positions shall provide a good estimation of the position of the object O. In the embodiment of Fig. 3, an arithmetic average AV of those positions is calculated resulting in a final estimated position pos output by the predictor PR. In case that there are no second neural networks NN21, ..., NN2n having a distance DIS' fulfilling the threshold criterion TC, a position cannot be estimated by the predictor PR due to a too high positional error. As a consequence, a corresponding message can be generated for a user on a user interface indicating that a position estimation is not possible.

The invention as described in the foregoing has several advantages. Particularly, an error mitigation is implemented for a localization method being based on fingerprinting. Do to so, a neural network structure is used where estimated positions having a high positional error are dropped. As a consequence, a more accurate position can be determined.

Independent of the grammatical term usage, individuals with male, female or other gender identities are included within the term.

### List of Reference

[1] Niitsoo, A.; Edelhäußer, T.; Eberlein, E.; Hadaschik, N.; Mutschler, C. A Deep Learning Approach to Position Estimation from Channel Impulse Responses. Sensors 2019, 19, 1064.
[2] Taok, Anthony, Nahi Kandil, and Sofiene Affes. "Neural Networks for Fingerprinting-Based Indoor Localization Using Ultra-Wideband." J. Commun. 4.4 (2009): 267-275.
[3] Fontaine, J., Ridolfi, M., Van Herbruggen, B., Shahid, A., & De Poorter, E. (2020). Edge inference for UWB ranging error correction using autoencoders. IEEE access, 8, 139143-139155.

## Claims

1. A computer-implemented method for generating a predictor (PR) for a position (pos) of an object (O) within a predetermined environment (EN) by the use of a radio network (RN), where the radio network (RN) comprises a plurality of anchors (aᵢ, ..., aᵢ₊₃) being receivers for radio signals within the radio network (RN), the method comprising the following steps:
i) providing a plurality of data points (dᵤ), each data point (dᵤ) comprising a different ground truth position (r_p) of a sender (S, S') out of one or more senders (S, S') of the same type within the predetermined environment (EN) and several channel impulse responses (CIRₐ, ..., CIR_{z}), where each channel impulse response (CIRₐ, ..., CIR_{z}) belongs to a respective anchor (aᵢ, ..., aᵢ₊₃) of the plurality of anchors (aᵢ, ..., aᵢ₊₃) and represents a radio signal received by the respective anchor (aᵢ, ..., aᵢ₊₃) in response to a radio pulse of the sender (S, S') located at the ground truth position (r_p) of the respective data point (dᵤ);
ii) learning a first neural network structure (ST1) comprising one or more first neural networks (NN11, ..., NN1n) based on a first training data set comprising the ground truth position (r_p) and the channel impulse responses (CIRₐ, ..., CIR_{z}) of each data point (dᵤ), where a respective first neural network (NN11, ..., NN1n) is associated with another anchor group (ag₁, ..., agₙ) out of the plurality of anchors (aᵢ, ..., aᵢ₊₃), each anchor (aᵢ, ..., aᵢ₊₃) being included in at least one anchor group (ag₁, ..., agₙ), where the learning of the first neural network structure (ST1) has the target that, for a respective first neural network (NN11, ..., NN1n) and a respective data point (dᵤ), an estimated position (pos₁, ..., posₙ) output by the respective first neural network (NN11, ..., NN1n) in response to an input of the channel impulse responses (CIRₐ, ... , CIR_{z}) of the anchors (aᵢ, ..., aᵢ₊₃) of the associated anchor group (ag₁, ..., agₙ) of the respective first neural network (NN11, ..., NN1n) for the respective data point (dᵤ) corresponds to the ground truth position (r_p) of the respective data point (dᵤ);
iii) learning a second neural network structure (ST2) comprising one or more second neural networks (NN21, ..., NN2n) based on a second training data set, where a respective second neural network (NN21, ..., NN2n) is associated with a respective first neural network (NN11, ..., NN1n) and where the second training data set comprises, for a respective data point (dᵤ) and a respective second neural network (NN21, ..., NN2n), the channel impulse responses (CIRₐ, ..., CIR_{z}) of the anchors (aᵢ, ..., aᵢ₊₃) of the associated anchor group (ag₁, ..., agₙ) of the associated respective first neural network (NN11, ..., NN1n) and a ground truth distance (DIS) being the distance between the ground truth position (r_p) of the respective data point (dᵤ) and the estimated position (pos₁, ..., posₙ) output by the associated respective first neural network (NN11, ..., NN1n) in response to the input of the channel impulse responses (CIRₐ, ..., CIR_{z}) of the anchors (aᵢ, ..., aᵢ₊₃) of the associated anchor group (ag₁, ..., agₙ) of the associated respective first neural network (NN11, ..., NN1n) for the respective data point (dᵤ) , where the learning of the second neural network structure (ST2) has the target that, for a respective second neural network (NN21, ..., NN2n) and a respective data point (dᵤ), an estimated distance (DIS') output by the respective second neural network (NN21, ..., NN2n) corresponds to the ground truth distance (DIS) between the ground truth position (r_p) of the respective data point (dᵤ) and the estimated position (pos₁, ..., posₙ) output by the associated respective first neural network (NN11, ..., NN1n) in response to the input of the channel impulse responses (CIRₐ, ..., CIR_{z}) of the anchors (aᵢ, ..., aᵢ₊₃) of the associated anchor group (ag₁, ..., agₙ) of the associated respective first neural network (NN11, ..., NN1n) for the respective data point (dᵤ);
iv) configuring the predictor (PR) such that, when measured channel impulse responses (CIRₐ, ..., CIR_{z}) of the plurality of anchors (aᵢ, ..., aᵢ₊₃) resulting from a radio pulse of a sender (S") on the object (O) are provided as input to the first and second neural network structures (ST1, ST2), the predicted position (pos) of the object (O) is calculated only from the outputs of specific first neural networks (NN11, ..., NN1n) out of the one or more first neural networks (NN11, ..., NN1n), where each specific first neural network (NN11, ..., NN1n) is associated with a second neural network (NN21, ..., NN2n) having an output being below a value according to a threshold criterion (TC).

2. The method according to claim 1, wherein the predetermined environment (EN) is an indoor environment and/or an industrial plant.

3. The method according to claim1 or 2, wherein the one or more senders (S, S') of the same type in step i) each are senders on an automated guided vehicle.

4. The method according to one of the preceding claims, wherein the ground truth positions (r_p) provided in step i) are being acquired or have been acquired by a LIDAR system or an optical system moving together with the sender (S, S').

5. The method according to one of the preceding claims, wherein the radio network (RN) is based on a short range radio technology, preferably UWB, or a cellular radio technology, preferably 5G or 6G.

6. The method according to one of the preceding claims, wherein the one or more first neural networks (NN11, ..., NN1n) and/or the one or more second neural networks (NN21, ..., NN2n) are convolutional neural networks and/or deep neural networks.

7. The method according to one of the preceding claims, wherein the predicted position of the object (O) in step iv) is or depends on a mean of the outputs of the specific first neural networks (NN11, ..., NN1n).

8. The method according to claim 7, wherein the mean of the outputs of the specific first neural networks (NN11, ..., NN1n) is the arithmetic mean or a weighed mean, where the weight of an output of a respective specific first neural network (NN11, ..., NN1n) increases with a deceasing output of the associated second neural network (NN21, ..., NN2n).

9. The method according to one of the preceding claims, wherein the threshold criterion (TC) is such that the output of the second neural network (NN21, ..., NN2n) is below a predetermined threshold.

10. The method according to one of claims 1 to 8, wherein the threshold criterion (TC) is such that the output of the second neural network (NN21, ..., NN2n) belongs to a predetermined number of second neural networks (NN21, ..., NN2n) having the lowest outputs.

11. A computer-implemented method for predicting a position (pos) of an object (O) within a predetermined environment (EN) by the use of a radio network (RN), where the radio network (RN) comprises a plurality of anchors (aᵢ, ..., aᵢ₊₃) being receivers for radio signals within the radio network (RN), wherein a predictor (PR) has been generated or is being generated according to a method of one of the preceding claims and wherein measured channel impulse responses (CIRₐ, ..., CIR_{z}) of the plurality of anchors (aᵢ, ..., aᵢ₊₃) resulting from a radio pulse of a sender (S") on the object (O) are provided as input to the first and second neural network structures (ST1, ST2), resulting in a predicted position (pos) of the object (O).

12. An apparatus for data processing, wherein the apparatus is configured to carry out a method according to one of the preceding claims.

13. A computer program product with program code, which is stored on a machine-readable carrier, for carrying out a method according to one of claims 1 to 11 when the program code is executed on a computer.

14. A computer program with program code for carrying out a method according to one of claims 1 to 11 when the program code is executed on a computer.
